(19) Europäisches Patentamt / European Patent Office / Office européen des brevets

(11) **EP 2 773 062 B1**

(12) **EUROPEAN PATENT SPECIFICATION**

(45) Date of publication and mention
of the grant of the patent:
**24.10.2018 Bulletin 2018/43**

(21) Application number: **12843783.7**

(22) Date of filing: **29.06.2012**

(51) Int Cl.:
*H04L 9/32* *(2006.01)*          *H04W 12/06* *(2009.01)*

(86) International application number:
**PCT/CN2012/077841**

(87) International publication number:
**WO 2013/060160 (02.05.2013 Gazette 2013/18)**

(54) **MUTUAL IDENTITY AUTHENTICATION METHOD AND SYSTEM FOR WIRELESS SENSOR NETWORK**

VERFAHREN UND SYSTEM FÜR GEGENSEITIGE IDENTITÄTSAUTHENTIFIZIERUNG FÜR EIN DRAHTLOSES SENSORNETZ

PROCÉDÉ ET SYSTÈME D'AUTHENTIFICATION D'IDENTITÉ MUTUELLE POUR UN RÉSEAU DE CAPTEURS SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2011 CN 201110329792**

(43) Date of publication of application:
**03.09.2014 Bulletin 2014/36**

(73) Proprietor: **ZTE Corporation**
**Shenzhen, Guangdong 518057 (CN)**

(72) Inventors:
• **YU, Changjian**
  **Shenzhen**
  **Guangdong 518057 (CN)**
• **WANG, Jingcheng**
  **Shenzhen**
  **Guangdong 518057 (CN)**
• **ZHANG, Zhenwei**
  **Shenzhen**
  **Guangdong 518057 (CN)**
• **LONG, Xiao**
  **Shenzhen**
  **Guangdong 518057 (CN)**
• **FU, Li**
  **Shenzhen**
  **Guangdong 518057 (CN)**

• **ZHAO, Guanglei**
  **Shenzhen**
  **Guangdong 518057 (CN)**
• **LUO, Jian**
  **Shenzhen**
  **Guangdong 518057 (CN)**

(74) Representative: **J A Kemp**
  **14 South Square**
  **Gray's Inn**
  **London WC1R 5JJ (GB)**

(56) References cited:
**WO-A1-2006/035400          CN-A- 101 119 196**
**CN-A- 101 145 913          US-B1- 8 042 155**

• **GUANGLEI ZHAO ET AL: "A novel mutual authentication scheme for Internet of Things", MODELLING, IDENTIFICATION AND CONTROL (ICMIC), PROCEEDINGS OF 2011 INTERNATIONAL CONFERENCE ON, IEEE, 26 June 2011 (2011-06-26), pages 563-566, XP032160646, DOI: 10.1109/ICMIC.2011.5973767**
• **ZHANG ZHI: "A Cryptography System for Wireless Sensor Networks Based on IBE and CPK Algorithms", COMPUTATIONAL INTELLIGENCE AND INDUSTRIAL APPLICATION, 2008. PACIIA '08. PACIFIC-ASIA WORKSHOP ON, IEEE, PISCATAWAY, NJ, USA, 19 December 2008 (2008-12-19), pages 857-861, XP031410107, ISBN: 978-0-7695-3490-9**

**Description**

The present document relates to an identity authentication technology for a network node, and in particular, to a mutual identity authentication method and system for a wireless sensor network.

With the rapid development of the wireless sensor network technology, applications thereof have been spread throughout various fields, and with the continuous popularization of the Internet of things technology in China, it also facilitates popularization and application of the wireless sensor network technology to a certain extent. Therefore, with the application of the technology, attack measures such as stealing, counterfeiting etc. for the identity of a terminal node and a platform are more and more accordingly.

Identity authentication is an important aspect of the network security technology. The identity authentication mechanism is used to prevent illegal users from accessing network resources, and can avoid illegal attacks such as counterfeiting, falsification, denial etc., thus the user's identity can be ensured, which is the foundation of other security mechanisms. If the identity authentication system is counterfeited or broken through, other security measures of the whole system become meaningless. Therefore, the identity authentication is very important to ensure the security of the wireless sensor system.

Mutual identity authentication refers to that both communication parties need to authenticate the identity of the other party, so that it can more effectively prevent the situation in which the terminal node and the platform are counterfeited, so as to improve the overall safety performance of the system.

With the popularization of the application of the wireless sensor network, and at the same time as the hacker's attack measures become more diverse and aggressive, users make higher requirements on safety and reliability of the mutual identity authentication. Classic Needha, Schroeder protocols and the ECDSA protocol under the public key cryptosystems all have some security deficiencies, and these deficiencies are mainly embedded in singleness of the authentication elements and vulnerability of hash functions, and at the same time, they further involve the problems of current limited calculation capability of the terminal node.

Specifically, the current mutual identity authentication method for a wireless sensor network further has the following three problems:

Firstly, in view of the condition that the elements of the traditional mutual identity authentication are single, at present, some scholars put forward a concept of multi-element authentication, which simply is to increase the number of elements of the authentication, so as to improve the security of the identity authentication through elements with different properties. However, the multi-element authentication methods adopted currently need to perform verification many times on the elements with different properties, thus increasing time and communication burden of the authentication to a certain extent.

Secondly, Verification after performing hash transformation by concentrating multiple elements is difficult to avoid attacks such as collision effectively, and is an inadvisable identity authentication method. Therefore, in the mutual identity authentication for a wireless sensor network, there is a need for a method capable of authenticating by mutual participation of multiple elements and effectively avoiding attacks such as collision against hash functions.

Finally, the use of multi-element authentication has very large power consumption in the process of mutual identity authentication due to limited calculating and processing capabilities of the terminal node while enhancing the security of the system.

The features of the preamble of the independent claims are known from "A novel mutual authentication scheme for Internet of Things" of GUANGLEI ZHAO ET AL, MODELLING, IDENTIFICATION AND CONTROL (ICMIC), PROCEEDINGS OF 2011 INTERNATIONAL CONFERENCE ON, IEEE, 26 June 2011 (2011-06-26), DOI: 10.1109/ ICMIC.2011.5973767.

An aim of the embodiments of the present document is to provide a mutual identity authentication method and system for a wireless sensor network, so as to enhance the security in the identity authentication.

According to the present invention there are provided a mutual identity authentication method, a mutual identity authentication system for a wireless sensor network, a terminal node and a platform as defined in the independent claims.

It can be seen from the above technical solutions that in the embodiments of the present document, authentication elements used in the authentication are diversified, wherein, the embodiments of the present document increase the number of the authentication elements in the identity authentication to 5, comprising the node identity ID (or hardware verification/identification code), the matrix password number MX, the random number R returned by the platform, the administrator number AN and the administrator key AK. Wherein, the node identity ID is a unique identity which can primarily be used to distinguish the node from other nodes; the matrix password number MX is a common matrix password element for searching for a corresponding administrator key according to the matrix identity returned by the platform; the random number R returned by the platform is a group of random numbers returned by the platform with a length longer than the number of digits of other elements; and the administrator number AN and the administrator key AK are administrator login information preset in the node, and these elements are preset in the terminal node of the present system, thus facilitating manual operations and maintenance of nodes capable of human-computer interaction, and also provide space and convenience for extension of some nodes having potential functions. These five elements comprise an ID with uniqueness, an administrator number and an administrator key with security, and a matrix password and a random number with dynamics, which largely enhance the security relative to the previous solutions only having an authentication element of one aspect. On the other hand, the embodiments of the present document avoid using a private key element currently under the risk of many attack measures, and therefore can effectively prevent the system from being damaged by some targeted attacks.

The accompanying drawings described herein are used to provide a further understanding of the present document and constitute a part of the present document, and the schematic embodiments of the present document and the descriptions thereof are used to explain the present document and do not constitute a improper limit on the present document. In the accompanying drawings:

Fig. 1 is a flowchart of a mutual identity authentication method for a wireless sensor network according to an embodiment of the present document;

Fig. 2 is a structural diagram of a mutual identity authentication system for a wireless sensor network according to an embodiment of the present document; and

Fig. 3 is a flowchart of element combination and feature abstraction according to an embodiment of the present document.

In order to make the technical problems to be solved by the present document, the technical solutions and beneficial effects more clear and apparent, the present document will further be described in detail below in conjunction with accompanying drawings and embodiments. It should be understood that the specific embodiments described herein are merely used to explain the present document instead of limiting the present document.

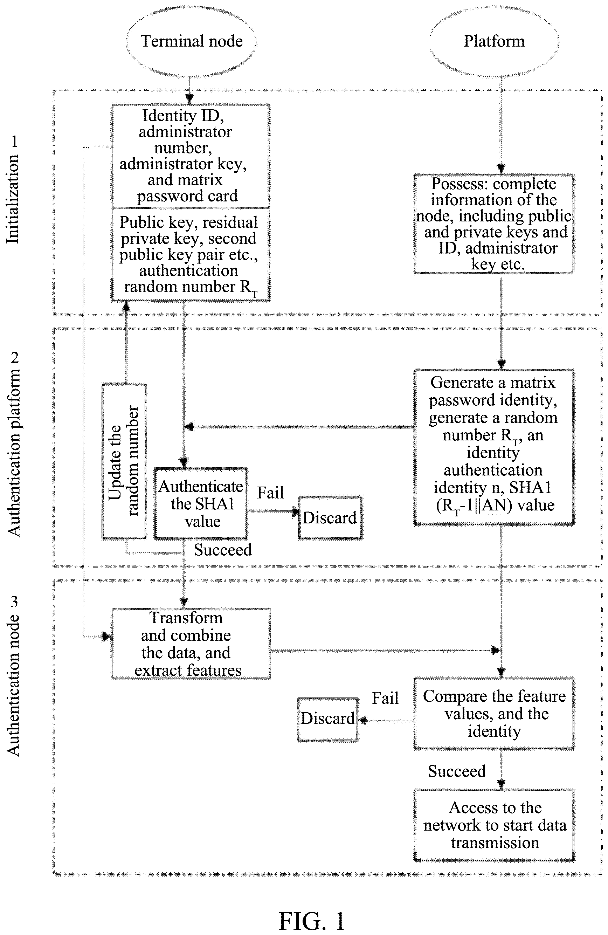

Embodiments of the present document provide a mutual identity authentication method for a wireless sensor network, and with reference to Fig. 1, the method comprises the following steps.

In step S101, a platform broadcasts random number information $R_T$ randomly generated in a T$^{th}$ authentication phase, password matrix identity information, $SHA1(R_{T-1} \| AN)$ information of a platform, and displacement identity n to a terminal node, wherein, $SHA1(R_{T-1} \| AN) = SHA1(R_{T-1} \oplus (AN << n))$; $R_{T-1}$ is authentication random number information in a T-1$^{th}$ authentication phase stored by the platform, and AN is administrator number information of a terminal node; wherein, in $SHA1(R_{T-1} \oplus (AN << n)$, $\oplus$ is a bitwise summation notation, $AN << n$ represents left shifting n bits for a binary number of AN, and $SHA1(R_{T-1} \| AN)$ represents a $SHA1$ transformation value of the authentication random number $R_{T-1}$ and the administrator number AN.

In step S102, the terminal node calculates $SHA1(R_{T-1} \| AN)$ information of the terminal according to authentication random number information $R_{T-1}$ of the T-1$^{th}$ authentication phase and administrator number information AN stored by itself, if the $SHA1(R_{T-1} \| AN)$ information of the terminal is different from the $SHA1(R_{T-1} \| AN)$ information of the platform, a verification of identity fails; otherwise, matrix password value MX information is obtained according to the password matrix identity information received by the terminal node from the platform and password matrix *Matrix* information pre-stored in the terminal node, and at the same time the random number information $R_T$ transmitted by the platform is updated to a storage space of the terminal node.

In step S103, the terminal node performs $SHA1$ transformation on the obtained matrix password value MX information and random number information $R_T$ and pre-stored identity ID information, administrator number AN information and administrator key AK information respectively, and combines the transformation results into a first global matrix $SHA_{matrix}$ and then calculates a first variance value $\sigma^2$ and a first energy value $\mu_N$ of the first global matrix $SHA_{matrix}$, and transmits the first variance $\sigma^2$ and the first energy value $\mu_N$ to the platform.

In step S104, the platform obtains matrix password value MX information of the platform according to the password matrix identity information stored by itself and the password matrix *Matrix* information of the terminal node, and performs $SHA1$ transformation on the matrix password value MX information together with the identity ID information, the administrator number AN information, the administrator key AK information, and the random number information $R_T$ stored by the platform respectively, and combines the transformation results into a second global matrix $SHA_{matrix}$ and then calculates a second variance value $\sigma^2$ and a second energy value $\mu_N$ of the second global matrix $SHA_{matrix}$, and when the second variance value $\sigma^2$ and the second energy value $\mu_N$ match the received first variance value $\sigma^2$ and first energy value $\mu_N$, the verification of the identity passes.

Wherein, in the step S102, the calculation equation of the $SHA1(R_{T-1} \| AN)$ information of the platform is

$$= \sum_{i=0}^{15} H_{static}(i)^2 + 2 \sum_{i=0}^{15} H_{static}(i) \sum_{i=0}^{15} H_{dynamic}(i) + \sum_{i=0}^{15} H_{dynamic}(i)^2 \; .$$

In a preferred embodiment, before all of the steps S101-S104 are performed, the following steps may also be comprised:

in step S1001, identity ID information, administrator number AN information, administrator key AK information, password matrix *Matrix* information and initial authentication random number information $R_0$ are preset for the terminal node, and the information is stored; and

In step S1002, the platform obtains identity ID information, administrator number AN information, administrator key AK information, password matrix *Matrix* information and initial authentication random number information $R_0$ of each terminal node, and stores the obtained information.

In the step S103, the first variance value $\sigma^2$ and the first energy value $\mu_N$ are obtained according to the following equations:

$$\sigma^2 = \sum_{i=0}^{L-1} (i - \mu)^2 H(i) ,$$

$$\mu_N = \sum_{i=0}^{L-1} H(i)^2 ,$$

wherein, a mean value $\mu = \sum_{i=0}^{L-1} iH(i)$  ,  $H(i) = \dfrac{n_i}{N}$, $i = 0,1,...,L\text{-}1$ represents a frequency of occurrence of a distinct value, i represents a magnitude of the value, L represents a type of the value, $n_i$ represents the number of values of a matrix with a magnitude of i, and N represents the number of values of the matrix.

In the step S104, the second variance value $\sigma^2$ and the second energy value $\mu_N$ are obtained according to the following equations:

$$\sigma^2 = \sum_{i=0}^{L-1} (i - \mu)^2 H(i) ,$$

$$\mu_N = \sum_{i=0}^{L-1} H(i)^2 ,$$

wherein, a mean value $\mu = \sum_{i=0}^{L-1} iH(i)$  ,  $H(i) = \dfrac{n_i}{N}$, $i = 0,1,...,L\text{-}1$ represents a frequency of occurrence of a distinct value, i represents a magnitude of the value, L represents a type of the value, $n_i$ represents the number of values of a matrix with a magnitude of i, and N represents the number of values of the matrix.

The mean value $\mu$ is obtained according to the following equation:

$$\mu = \sum_{i=0}^{L-1} iH_{static}(i) + \sum_{i=0}^{L-1} iH_{dynamic}(i) ,$$

wherein, a frequency of occurrence of a distinct value for an invariable element is $H_{static}(i) = H_a(i) + H_d(i) + H_e(i)$, $H_a(i), H_d(i), H_e(i)$ respectively represent frequencies of occurrences of the obtained results after the *SHA1* transformation is performed on the identity ID information, the administrator number AN information and the administrator key AK information; and a frequency of occurrence of a distinct value for a variable element is $H_{dynamic}(i) = H_b(i) + H_c(i)$, $H_b(i)$, $H_c(i)$ respectively represent frequencies of occurrences of the obtained results after the *SHA1* transformation is performed on the password matrix *Matrix* information and the initial authentication random number information. The frequency of occurrence $H_{static}(i)$ of a distinct value for an invariable element is stored (on each terminal node and the platform) when the system is initialized, for being called later when the first variance value $\sigma^2$, the first energy value $\mu_N$, the second

variance value $\sigma^2$ and the second energy value $\mu_N$ are calculated.

Wherein, since three of the five elements, i.e., the identity ID, administrator number, administrator key are directly stored on the terminal node and the platform and are not changed with the change of the times of authentication etc., when the terminal node and the platform are initialized, some temporal storage spaces are set for storing these intermediate quantities which are invariable, so as to achieve the purpose of simplifying calculation consumption as specifically described as follows.

Firstly, for the variance and energy, it needs to use frequencies of occurrences of different values. Assume that the SHA1 transformation values of five elements, i.e., the identity ID, the matrix password, the random number returned by the platform, the administrator number and administrator key are a, b, c, d, and e respectively. Then, the terminal node performs *SHA*1 transformation according to the identity ID information, matrix password value MX information, random number information $R_T$, administrator number AN information and administrator key AK information respectively, and combines the transformation results (for example, a, b, c, d and e) into a first or second global matrix $SHA_{matrix}$, and then calculates the variance $\sigma^2$ and energy $\mu_N$ of the matrix $SHA_{matrix}$, wherein,

$$H(i) = \frac{n_i}{N} = \frac{n_{ia}}{N} + \frac{n_{ib}}{N} + \frac{n_{ic}}{N} + \frac{n_{id}}{N} + \frac{n_{ie}}{N}$$
$$= H_a(i) + H_b(i) + H_c(i) + H_d(i) + H_e(i)$$
$$= H_{static}(i) + H_{dynamic}(i)$$

wherein, $H_{static}(i) = H_a(i)+H_d(i)+H_e(i)$ represents a frequency of occurrence of a distinct value in the *SHA*1 value for an invariable element, and $H_{danamic}(i) = H_b(i)+H_c(i)$ represents a frequency of occurrence of a distinct value in the *SHA*1 value for a variable element, and therefore, the calculation equation of the energy $\mu_N$ may be transformed into:

$$\mu_N = \sum_{i=0}^{15} H(i)^2$$
$$= \sum_{i=0}^{15} (H_{static}(i) + H_{dynamic}(i))^2$$
$$= \sum_{i=0}^{15} (H_{static}(i)^2 + 2H_{static}(i)H_{dynamic}(i) + H_{dynamic}(i)^2)$$
$$= \sum_{i=0}^{15} H_{static}(i)^2 + 2\sum_{i=0}^{15} H_{static}(i)\sum_{i=0}^{15} H_{dynamic}(i) + \sum_{i=0}^{15} H_{dynamic}(i)^2$$

wherein, for $\sum_{i=0}^{15} H_{static}(i)^2$ and $\sum_{i=0}^{15} H_{static}(i)$, the *SHA*1 values of static elements (the identity ID, administrator number and administrator key) are known and maintain stable and invariable, thereby are calculated and stored in advance when the system is initialized, and therefore, only $\sum_{i=0}^{15} H_{dynamic}(i)$ and $\sum_{i=0}^{15} H_{dynamic}(i)^2$ need to be calculated when the energy is calculated, and on basis of the above calculation mode, the calculation quantity can be reduced by more than half.

Correspondingly, the calculation of the variance needs to use the following mean value:

$$\mu = \sum_{i=0}^{15} iH_{static}(i) + \sum_{i=0}^{15} iH_{dynamic}(i) \ ,$$

When the variance is calculated each time, as it relates to calculating the difference between the mean value and each value of the matrix, the variance and the mean value will not be processed separately, and after the mean value is optimized, it is equivalent to an indirect optimization of the calculation of the variance.

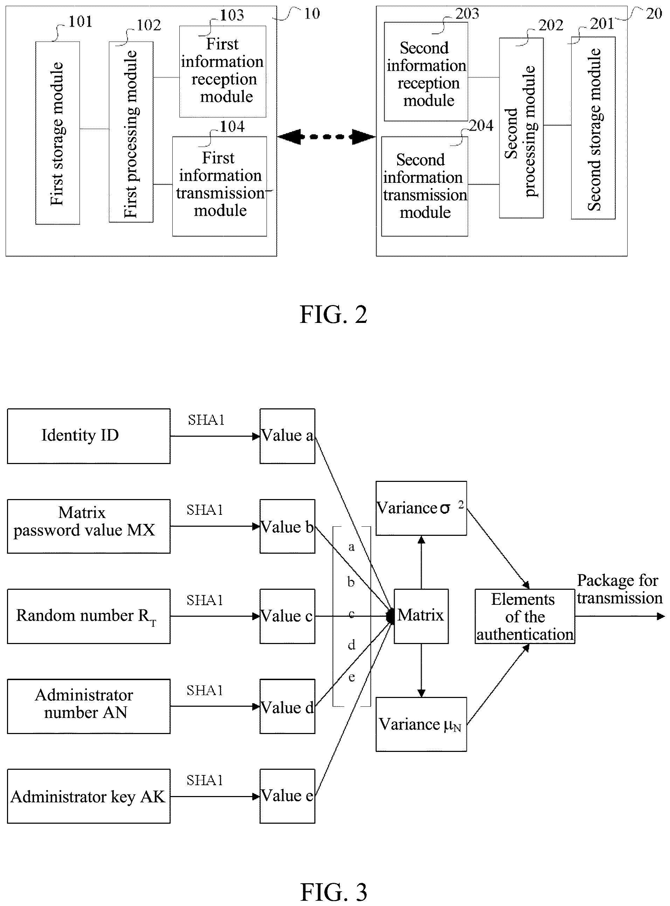

The embodiments of the present document further provide a mutual identity authentication system for a wireless sensor network, and as shown in Fig. 2, the system comprises a terminal node 10 and a platform 20, wherein, the terminal node 10 comprises a first information reception module 103, a first storage module 101, a first processing module 102 and a first information transmission module 104, wherein,

the first information reception module 103 is configured to obtain random number information $R_T$ randomly generated in a $T^{th}$ authentication phase, password matrix identity information, $SHA1(R_{T-1} \parallel AN)$ information of the platform and displacement identity n from the platform 20;

the first storage module 101 is configured to store authentication random number information $R_{T-1}$ of the T-1$^{th}$ authentication phase, administrator number information AN, password matrix *Matrix* information and administrator key AK information;

the first processing module 102 is configured to calculate $SHA1(R_{T-1} \parallel AN)$ information of the terminal according to random number information $R_{T-1}$ of the T-1$^{th}$ authentication phase and administrator number information AN stored by itself, and if the $SHA1(R_{T-1} \parallel AN)$ information of the terminal is different from the $SHA1(R_{T-1} \parallel AN)$ information of the platform, determine that a verification of identity fails; otherwise, obtain matrix password value MX information according to the password matrix identity information received by the terminal node from the platform and password matrix *Matrix* information pre-stored in the terminal node, and at the same time update the random number information $R_T$ transmitted by the platform to a storage space of the terminal node; and perform $SHA1$ transformation on the obtained matrix password value MX information and random number information $R_T$ and pre-stored identity ID information, administrator number AN information and administrator key AK information respectively, and combine the transformation results into a first global matrix $SHA_{matrix}$ and then calculate a first variance value $\sigma^2$ and a first energy value $\mu_N$ of the first global matrix $SHA_{matrix}$, and transmit the first variance $\sigma^2$ and the first energy value $\mu_N$ to the first information transmission module 104;

the first information transmission module 104 is configured to transmit the first variance value $\sigma^2$ and the first energy value $\mu_N$ to the platform 20;

the platform 20 comprises a second information reception module 203, a second storage module 201, a second processing module 202 and a second information transmission module 204, wherein,

the second information reception module 203 is configured to receive the first variance value $\sigma^2$ and the first energy value $\mu_N$ from each terminal node;

the second storage module 201 is configured to store the authentication random number information $R_{T-1}$ of a T-1$^{th}$ authentication phase, identity ID information, administrator number AN information, administrator key AK information, password matrix identity information and password matrix *Matrix* information of each terminal node;

the second processing module 202 is configured to obtain matrix password value MX information of the platform according to the password matrix identity information stored by itself and the password matrix *Matrix* information of the terminal node, and perform $SHA1$ transformation on the matrix password value MX information together with the identity ID information, the administrator number AN information, the administrator key AK information, and the random number information $R_T$ stored by the platform respectively, and combine the transformation results into a second global matrix $SHA_{matrix}$ and then calculate a second variance value $\sigma^2$ and a second energy value $\mu_N$ of the second global matrix $SHA_{matrix}$, and when the second variance value $\sigma^2$ and the second energy value $\mu_N$ match the received first variance value $\sigma^2$ and first energy value $\mu_N$, determine that the verification of the identity passes;

the second information transmission module 204 is configured to broadcast random number information $R_T$ randomly generated in a $T^{th}$ authentication phase, password matrix identity information, $SHA1(R_{T-1} \parallel AN)$ information of the platform and displacement identity n to each terminal node.

The first variance value $\sigma^2$ and the first energy value $\mu_N$ are obtained according to the following equations:

$$\sigma^2 = \sum_{i=0}^{L-1} (i - \mu)^2 H(i) \, ,$$

$$\mu_N = \sum_{i=0}^{L-1} H(i)^2 \, ,$$

wherein, a mean value $\mu = \sum_{i=0}^{L-1} iH(i) \, , \quad H(i) = \dfrac{n_i}{N} \, ,$ i = 0,1,...,L-1 represents a frequency of occurrence of a distinct value, i represents a magnitude of the value, L represents a type of the value, $n_i$ represents the number of values of a matrix with a magnitude of i, and N represents the number of values of the matrix.

Similarly, the second variance value $\sigma^2$ and the second energy value $\mu_N$ are obtained according to the following equations:

$$\sigma^2 = \sum_{i=0}^{L-1}(i-\mu)^2 H(i) \, ,$$

$$\mu_N = \sum_{i=0}^{L-1} H(i)^2 \, ,$$

wherein, a mean value $\mu = \sum_{i=0}^{L-1} iH(i)$ , $H(i) = \dfrac{n_i}{N}$, $i = 0,1,...,L$-1 represents a frequency of occurrence of a distinct value, i represents a magnitude of the value, L represents a type of the value, $n_i$ represents the number of values of a matrix with a magnitude of i, and N represents the number of values of the matrix.

The mean value $\mu$ is obtained according to the following equation:

$$\mu = \sum_{i=0}^{L-1} iH_{static}(i) + \sum_{i=0}^{L-1} iH_{dynamic}(i) \, ,$$

wherein, a frequency of occurrence of a distinct value for an invariable element is $H_{static}(i) = H_a(i) + H_d(i) + H_e(i)$, $H_a(i),H_d(i),H_e(i)$ respectively represent frequencies of occurrences of the obtained results after the *SHAI* transformation is performed on the identity ID information, the administrator number AN information and the administrator key AK information; and a frequency of occurrence of a distinct value for a variable element is $H_{danamic}(i) = H_b(i) + H_c(i)$, $H_b(i),H_c(i)$ respectively represent frequencies of occurrences of the obtained results after the *SHAI* transformation is performed on the password matrix *Matrix* information and the initial authentication random number information.

The frequency of occurrence $H_{static}(i)$ of a distinct value for an invariable element is stored in the first storage module and the second storage module when the system is initialized, for being called later when the first variance value $\sigma^2$, the first energy value $\mu_N$, the second variance value $\sigma^2$ and the second energy value $\mu_N$ are calculated.

The embodiments of the present document further provide a terminal node, and as shown in Fig. 2, the terminal node comprises a first information reception module 103, a first storage module 101, a first processing module 102 and a first information transmission module 104, wherein,

the first information reception module 103 is configured to obtain random number information $R_T$ randomly generated in a T$^{th}$ authentication phase, password matrix identity information, $SHA1(R_{T-1} \parallel AN)$ information of the platform and displacement identity n from the platform;

the first storage module 101 is configured to store authentication random number information $R_{T-1}$ of the T-1$^{th}$ authentication phase, administrator number information AN, password matrix *Matrix* information and administrator key AK information;

the first processing module 102 is configured to calculate $SHA1(R_{T-1} \parallel AN)$ information of the terminal according to random number information $R_{T-1}$ of the T-1$^{th}$ authentication phase and administrator number information AN stored by the terminal node itself, and if the $SHA1(R_{T-1} \parallel AN)$ information of the terminal is different from the $SHA1(R_{T-1} \parallel AN)$ information of the platform, determine that a verification of identity fails; otherwise, obtain matrix password value MX information according to the password matrix identity information received by the terminal node from the platform and password matrix *Matrix* information pre-stored in the terminal node, and at the same time update the random number information $R_T$ transmitted by the platform to a storage space of the terminal node; and perform *SHA1* transformation on the obtained matrix password value MX information and random number information $R_T$ and pre-stored identity ID information, administrator number AN information and administrator key AK information respectively, and combine the transformation results into a first global matrix $SHA_{matrix}$ and then calculate a first variance value $\sigma^2$ and a first energy value $\mu_N$ of the first global matrix $SHA_{matrix}$, and transmit the first variance $\sigma^2$ and the first energy value $\mu_N$ to the first information transmission module;

the first information transmission module 104 is configured to transmit the first variance value $\sigma^2$ and the first energy value $\mu_N$ to the platform.

The first variance value $\sigma^2$ and the first energy value $\mu_N$ are obtained according to the following equations:

$$\sigma^2 = \sum_{i=0}^{L-1}(i-\mu)^2 H(i)$$

$$\mu_N = \sum_{i=0}^{L-1} H(i)^2 \ ,$$

wherein, a mean value $\mu = \sum_{i=0}^{L-1} iH(i)$, $H(i) = \dfrac{n_i}{N}$, $i = 0,1,...,L$-1 represents a frequency of occurrence of a distinct value, i represents a magnitude of the value, L represents a type of the value, $n_i$ represents the number of values of a matrix with a magnitude of i, and N represents the number of values of the matrix.

The mean value $\mu$ is obtained according to the following equation:

$$\mu = \sum_{i=0}^{L-1} iH_{static}(i) + \sum_{i=0}^{L-1} iH_{dynamic}(i) \ ,$$

wherein, a frequency of occurrence of a distinct value for an invariable element is $H_{static}(i) = H_a(i)+H_d(i)+H_e(i)$, $H_a(i),H_d(i),H_e(i)$ respectively represent frequencies of occurrences of the obtained results after the *SHA1* transformation is performed on the identity ID information, the administrator number AN information and the administrator key AK information; and a frequency of occurrence of a distinct value for a variable element is $H_{dynamic}(i) = H_b(i)+H_c(i)$, $H_b(i),H_c(i)$ respectively represent frequencies of occurrences of the obtained results after the *SHA1* transformation is performed on the password matrix *Matrix* information and the initial authentication random number information.

Alternatively the frequency of occurrence $H_{static}(i)$ of a distinct value for an invariable element is stored in the first storage module when the system is initialized, for being called later when the first variance value $\sigma^2$ and the first energy value $\mu_N$ are calculated.

The embodiments of the present document further provide a platform, and as shown in Fig. 2, the platform 20 comprises a second information reception module 203, a second storage module 201, a second processing module 202 and a second information transmission module 204, wherein,

the second information reception module 203 is configured to receive the first variance value $\sigma^2$ and the first energy value $\mu_N$ from each terminal node;

the second storage module 201 is configured to store the authentication random number information $R_{T-1}$ of a T-1th authentication phase, identity ID information, administrator number AN information, administrator key AK information, password matrix identity information and password matrix *Matrix* information of each terminal node;

the second processing module 202 is configured to obtain matrix password value MX information of the platform according to the password matrix identity information stored by the platform itself and the password matrix *Matrix* information of the terminal node, and perform *SHA1* transformation on the matrix password value MX information together with the identity ID information, the administrator number AN information, the administrator key AK information, and the random number information $R_T$ stored by the platform respectively, and combine the transformation results into a second global matrix $SHA_{matrix}$ and then calculate a second variance value $\sigma^2$ and a second energy value $\mu_N$ of the second global matrix $SHA_{matrix}$, and when the second variance value $\sigma^2$ and the second energy value $\mu_N$ match the received first variance value $\sigma^2$ and first energy value $\mu_N$, determine that a verification of the identity passes;

the second information transmission module 204 is configured to broadcast random number information $R_T$ randomly generated in a Tth authentication phase, password matrix identity information, $SHA1(R_{t-1} \| AN)$ information of the platform and displacement identity n to each terminal node.

The second variance value $\sigma^2$ and the second energy value $\mu_N$ are obtained according to the following equations:

$$\sigma^2 = \sum_{i=0}^{L-1} (i-\mu)^2 H(i) \ ,$$

$$\mu_N = \sum_{i=0}^{L-1} H(i)^2 \ ,$$

wherein, a mean value $\mu = \sum_{i=0}^{L-1} iH(i)$, $H(i) = \dfrac{n_i}{N}$, $i = 0,1,...,L$-1 represents a frequency of occurrence of a distinct value, i represents a magnitude of the value, L represents a type of the value, $n_i$ represents the number of values of a matrix with a magnitude of i, and N represents the number of values of the matrix.

The mean value $\mu$ is obtained according to the following equation:

$$\mu = \sum_{i=0}^{L-1} i H_{static}(i) + \sum_{i=0}^{L-1} i H_{dynamic}(i) \, ,$$

wherein, a frequency of occurrence of a distinct value for an invariable element is $H_{static}(i) = H_a(i)+H_d(i)+H_e(i)$, $H_a(i),H_d(i),H_e(i)$ respectively represent frequencies of occurrences of the obtained results after the *SHAI* transformation is performed on the identity ID information, the administrator number AN information and the administrator key AK information; and a frequency of occurrence of a distinct value for a variable element is $H_{danamic}(i) = H_b(i)+H_c(i)$, $H_b(i),H_c(i)$ respectively represent frequencies of occurrences of the obtained results after the *SHAI* transformation is performed on the password matrix *Matrix* information and the initial authentication random number information.

Alternatively, the frequency of occurrence $H_{static}(i)$ of a distinct value for an invariable element is stored in the second storage module when the system is initialized, for being called later when the second variance value $\sigma^2$ and the second energy value $\mu_N$ are calculated.

In the embodiments of the present document, authentication elements used in the authentication are diversified, wherein, the embodiments of the present document increase the number of the authentication elements in the identity authentication to 5, comprising the node identity ID (or hardware verification/identification code), the matrix password number MX, the random number R returned by the platform, the administrator number AN and the administrator key AK. Wherein, the node identity ID is a unique identity which can primarily be used to distinguish the node from other nodes; the matrix password number MX is a common matrix password element for searching for a corresponding administrator key according to the matrix identity returned by the platform; the random number R returned by the platform is a group of random numbers returned by the platform with a length longer than the number of digits of other elements; and the administrator number AN and the administrator key AK are administrator login information preset in the node, and these elements are preset in the terminal node of the present system, thus facilitating manual operations and maintenance of nodes capable of human-computer interaction, and also provide space and convenience for extension of some nodes having potential functions. These five elements comprise an ID with uniqueness, an administrator number and an administrator key with security, and a matrix password and a random number with dynamics, which largely enhance the security relative to the previous solutions only having an authentication element of one aspect. On the other hand, the embodiments of the present document avoid using a private key element currently under the risk of many attack measures, and therefore can effectively prevent the system from being damaged by some targeted attacks.

The above description illustrates and describes a preferred embodiment of the present document. However, as described above, it should be understood that the present document is not limited to the form disclosed herein, and should not be considered as an exclusion of other embodiments, and the present document can be used for various other combinations, modifications and environments, and can be changed within the scope of the inventive concept according to the above teachings or technologies or knowledge in the related art. All changes and variations made by those skilled in the art should belong to the protection scope of the appended claims of the present document without departing from the scope of the claims.

The embodiments of the present document increase the number of the authentication elements in the identity authentication to 5, comprising the node identity ID (or hardware verification/identification code), the matrix password number MX, the random number R returned by the platform, the administrator number AN and the administrator key AK. Wherein, the node identity ID is a unique identity which can primarily be used to distinguish the node from other nodes; the matrix password number MX is a common matrix password element for searching for a corresponding administrator key according to the matrix identity returned by the platform; the random number R returned by the platform is a group of random numbers returned by the platform with a length longer than the number of digits of other elements; and the administrator number AN and the administrator key AK are administrator login information preset in the node, and these elements are preset in the terminal node of the present system, thus facilitating manual operations and maintenance of nodes capable of human-computer interaction, and also provide space and convenience for extension of some nodes having potential functions. These five elements comprise an ID with uniqueness, an administrator number and an administrator key with security, and a matrix password and a random number with dynamics, which largely enhance the security relative to the previous solutions only having an authentication element of one aspect. On the other hand, the embodiments of the present document avoid using a private key element currently under the risk of many attack measures, and therefore can effectively prevent the system from being damaged by some targeted attacks. Therefore, the present document has powerful industrial applicability.

**Claims**

1. A mutual identity authentication method for a wireless sensor network, comprising the following steps:

A. a platform broadcasting random number information $R_T$ randomly generated in a $T^{th}$ authentication phase, password matrix identity information, $SHA1(R_{T-1} \parallel AN)$ information of a platform and displacement identity n to a terminal node, wherein, $SHA1(R_{T-1} \parallel AN) = SHA1(R_{T-1} \oplus (AN << n))$; $R_{T-1}$ is authentication random number information of a T-$1^{th}$ authentication phase stored by the platform, and AN is administrator number information of the terminal node;

B. the terminal node calculating $SHA1(R_{T-1} \parallel AN)$ information of the terminal according to the authentication random number information $R_{T-1}$ of the T-$1^{th}$ authentication phase and administrator number information AN stored by the terminal node itself, if the $SHA1(R_{T-1} \parallel AN)$ information of the terminal is different from the $SHA1(R_{T-1} \parallel AN)$ information of the platform, determine that a verification of identity fails; otherwise, obtaining matrix password value MX information according to the password matrix identity information received by the terminal node from the platform and password matrix *Matrix* information pre-stored in the terminal node, and meanwhile, updating the random number information $R_T$ transmitted by the platform to a storage space of the terminal node;

C. the terminal node performing $SHA1$ transformation on the obtained matrix password value MX information and random number information $R_T$ and pre-stored identity ID information, administrator number AN information and administrator key AK information respectively, and combining the transformation results into a first global matrix $SHA_{matrix}$ and then calculating a first variance value $\sigma^2$ and a first energy value $\mu_N$ of the first global matrix $SHA_{matrix}$, and transmitting the first variance $\sigma^2$ and the first energy value $\mu_N$ to the platform; and

D. the platform obtaining matrix password value MX information of the platform according to the password matrix identity information stored by the platform itself and the password matrix *Matrix* information of the terminal node, and performing $SHA1$ transformation on the matrix password value MX information together with the identity ID information, the administrator number AN information, the administrator key AK information, and the random number information $R_T$ stored by the platform respectively, and combining the transformation results into a second global matrix $SHA_{matrix}$ and then calculating a second variance value $\sigma^2$ and a second energy value $\mu_N$ of the second global matrix $SHA_{matrix}$, and when the second variance value $\sigma^2$ and the second energy value $\mu_N$ match the received first variance value $\sigma^2$ and first energy value $\mu_N$, determining that the verification of the identity passes;

wherein in the step C and D, the first variance value $\sigma^2$ and the second variance value $\sigma^2$ are obtained according to the following equations:

$$\sigma^2 = \sum_{i=0}^{L-1} (i - \mu)^2 H(i) \,,$$

in the step C and D, the first energy value $\mu_N$ and the second energy value $\mu_N$ are obtained according to the following equations:

$$\mu_N = \sum_{i=0}^{L-1} H(i)^2 \,,$$

wherein, a mean value $\mu = \sum_{i=0}^{L-1} iH(i)$, $H(i) = \dfrac{n_i}{N}$, $i = 0,1,...,L\text{-}1$ represents a frequency of occurrence of a distinct value, i represents a magnitude of the value, L represents a type of the value, $n_i$ represents a number of values of a matrix with a magnitude of i, and N represents a number of values of the matrix;

**characterized in that**,

the mean value $\mu$ is obtained according to the following equation:

$$\mu = \sum_{i=0}^{L-1} iH_{static}(i) + \sum_{i=0}^{L-1} iH_{dynamic}(i) \,,$$

wherein, a frequency of occurrence of a distinct value for an invariable element is $H_{static}(i) = H_a(i)+H_d(i)+H_e(i)$, $H_a(i),H_d(i),H_e(i)$ respectively represent frequencies of occurrences of the obtained results after the *SHA1* transformation is performed on the identity ID information, the administrator number AN information and the administrator key AK information; and a frequency of occurrence of a distinct value for a variable element is $H_{dynamic}$ $(i) = H_b(i)+H_a(i)$, $H_b(i),H_c(i)$ respectively represent frequencies of occurrences of the obtained results after the *SHA1* transformation is performed on the password matrix *Matrix* information and the initial authentication random number information.

2. The method according to claim 1, further comprising:
before performing all steps according to claim 1, performing the following steps:

presetting identity ID information, administrator number AN information, administrator key AK information, password matrix *Matrix* information and initial authentication random number information $R_0$ for the terminal node, and storing the information; and
the platform obtaining identity ID information, administrator number AN information, administrator key AK information, password matrix *Matrix* information and initial authentication random number information $R_0$ of each terminal node, and storing the obtained information.

3. The method according to claim 1, further comprising:
storing the frequency of occurrence $H_{static}(i)$ of a distinct value for an invariable element when a system is initialized, for being called later when the first variance value $\sigma^2$, the first energy value $\mu_N$, the second variance value $\sigma^2$ and the second energy value $\mu_N$ are calculated.

4. A mutual identity authentication system for a wireless sensor network, comprising a terminal node and a platform, wherein,
the terminal node comprises a first information reception module (103), a first storage module (101), a first processing module (102) and a first information transmission module (104), wherein,
the first information reception module (103) is configured to obtain random number information $R_T$ randomly generated in a $T^{th}$ authentication phase, password matrix identity information, $SHA1(R_{T-1} \parallel AN)$ information of the platform and displacement identity n from the platform;
the first storage module (101) is configured to store authentication random number information $R_{T-1}$ of a $T-1^{th}$ authentication phase, administrator number information AN, password matrix *Matrix* information and administrator key AK information;
the first processing module (102) is configured to calculate $SHA1(R_{T-1} \parallel AN)$ information of the terminal according to random number information $R_{T-1}$ of the $T-1^{th}$ authentication phase and administrator number information AN stored by the terminal node itself, and if the $SHA1(R_{T-1} \parallel AN)$ information of the terminal is different from the $SHA1(R_{T-1} \parallel AN)$ information of the platform, determine that a verification of identity fails; otherwise, obtain matrix password value MX information according to the password matrix identity information received by the terminal node from the platform and password matrix *Matrix* information pre-stored in the terminal node, and meanwhile, update the random number information $R_T$ transmitted by the platform to a storage space of the terminal node; and perform *SHA1* transformation on the obtained matrix password value MX information and random number information $R_T$ and pre-stored identity ID information, administrator number AN information and administrator key AK information respectively, and combine the transformation results into a first global matrix $SHA_{matrix}$ and then calculate a first variance value $\sigma^2$ and a first energy value $\mu_N$ of the first global matrix $SHA_{matrix}$, and transmit the first variance $\sigma^2$ and the first energy value $\mu_N$ to the first information transmission module; and
the first information transmission module (104) is configured to transmit the first variance value $\sigma^2$ and the first energy value $\mu_N$ to the platform;
the platform comprises a second information reception module (203), a second storage module (201), a second processing module (202) and a second information transmission module (204), wherein,
the second information reception module (203) is configured to receive the first variance value $\sigma^2$ and the first energy value $\mu_N$ from each terminal node;
the second storage module (201) is configured to store the authentication random number information $R_{T-1}$ of a $T-1^{th}$ authentication phase, identity ID information, administrator number AN information, administrator key AK information, password matrix identity information and password matrix *Matrix* information of each terminal node;
the second processing module (202) is configured to obtain matrix password value MX information of the platform according to the password matrix identity information stored by the platform itself and the password matrix *Matrix* information of the terminal node, and perform *SHA1* transformation on the matrix password value MX information together with the identity ID information, the administrator number AN information, the administrator key AK information, and the random number information $R_T$ stored by the platform respectively, and combine the transformation results into a second global matrix $SHA_{matrix}$ and then calculate a second variance value $\sigma^2$ and a second energy value $\mu_N$ of the second global matrix $SHA_{matrix}$, and when the second variance value $\sigma^2$ and the second energy value $\mu_N$ match the received first variance value $\sigma^2$ and first energy value $\mu_N$, determine that the verification of the identity passes; and

the second information transmission module (204) is configured to broadcast random number information $R_T$ randomly generated in a T$^{th}$ authentication phase, password matrix identity information, $SHA1(R_{T-1} \| AN)$ information of the platform and displacement identity n to each terminal node;

wherein the first variance value $\sigma^2$ and the second variance value $\sigma^2$ are obtained according to the following equations:

$$\sigma^2 = \sum_{i=0}^{L-1} (i-\mu)^2 H(i) ,$$

the first energy value $\mu_N$ and the second energy value $\mu_N$ are obtained according to the following equations:

$$\mu_N = \sum_{i=0}^{L-1} H(i)^2 ,$$

wherein, a mean value $\mu = \sum_{i=0}^{L-1} iH(i) , \quad H(i) = \dfrac{n_i}{N},$ $i = 0,1,...,L-1$ represents a frequency of occurrence of a distinct value, i represents a magnitude of the value, L represents a type of the value, $n_i$ represents a number of values of a matrix with a magnitude of i, and N represents a number of values of the matrix;

**characterized in that**,

the mean value $\mu$ is obtained according to the following equation:

$$\mu = \sum_{i=0}^{L-1} iH_{static}(i) + \sum_{i=0}^{L-1} iH_{dynamic}(i) ,$$

wherein, a frequency of occurrence of a distinct value for an invariable element is $H_{static}(i) = H_a(i)+H_d(i)+H_e(i)$, $H_a(i),H_d(i),H_e(i)$ respectively represent frequencies of occurrences of the obtained results after the *SHA1* transformation is performed on the identity ID information, the administrator number AN information and the administrator key AK information; and a frequency of occurrence of a distinct value for a variable element is $H_{dynamic}(i) = H_b(i)+H_c(i)$, $H_b(i),H_c(i)$ respectively represent frequencies of occurrences of the obtained results after the *SHA1* transformation is performed on the password matrix *Matrix* information and the initial authentication random number information.

5. The system according to claim 4, wherein, the frequency of occurrence $H_{static}(i)$ of a distinct value for an invariable element is stored in the first storage module (101) and the second storage module (201) when the system is initialized, for being called later when the first variance value $\sigma^2$, the first energy value $\mu_N$, the second variance value $\sigma^2$ and the second energy value $\mu_N$ are calculated.

6. A terminal node, comprising a first information reception module, a first storage module, a first processing module and a first information transmission module, wherein,

the first information reception module (103) is configured to obtain random number information $R_T$ randomly generated in a T$^{th}$ authentication phase, password matrix identity information, $SHA1(R_{T-1} \| AN)$ information of a platform and displacement identity n from the platform;

the first storage module (101) is configured to store authentication random number information $R_{T-1}$ of a T-1$^{th}$ authentication phase, administrator number information AN, password matrix *Matrix* information and administrator key AK information;

the first processing module (102) is configured to calculate $SHA1(R_{T-1} \| AN)$ information of the terminal according to the random number information $R_{T-1}$ of the T-1$^{th}$ authentication phase and the administrator number information AN stored by the terminal node itself, and if the $SHA1(R_{T-1} \| AN)$ information of the terminal is different from the $SHA1(R_{T-1} \| AN)$ information of the platform, determine that a verification of identity fails; otherwise, obtain matrix password value MX information according to the password matrix identity information received by the terminal node from the platform and password matrix *Matrix* information pre-stored in the terminal node, and meanwhile, update the random number information $R_T$ transmitted by the platform to a storage space of the terminal node; and perform *SHA*1 transformation on the obtained matrix password value MX information and random number information $R_T$ and pre-stored identity ID information, administrator number AN information and administrator key AK information respectively, and combine the transformation results into a first global matrix $SHA_{matrix}$ and then calculate a first variance value $\sigma^2$ and a first energy value $\mu_N$ of the first global matrix $SHA_{matrix}$, and transmit the first variance $\sigma^2$ and the first energy value $\mu_N$ to the first information transmission module; and

the first information transmission module (104) is configured to transmit the first variance value $\sigma^2$ and the first energy value $\mu_N$ to the platform;

wherein, the first variance value $\sigma^2$ and the first energy value $\mu_N$ are obtained according to the following equations:

$$\sigma^2 = \sum_{i=0}^{L-1} (i - \mu)^2 H(i) \, ,$$

$$\mu_N = \sum_{i=0}^{L-1} H(i)^2 \, ,$$

wherein, a mean value $\mu = \sum_{i=0}^{L-1} i H(i) \, , \quad H(i) = \dfrac{n_i}{N} \, ,$ $i = 0,1,...,L$-1 represents a frequency of occurrence of a distinct value, i represents a magnitude of the value, L represents a type of the value, $n_i$ represents a number of values of a matrix with a magnitude of i, and N represents a number of values of the matrix,

**characterized in that**, the mean value $\mu$ is obtained according to the following equation:

$$\mu = \sum_{i=0}^{L-1} i H_{static}(i) + \sum_{i=0}^{L-1} i H_{dynamic}(i) \, ,$$

wherein, a frequency of occurrence of a distinct value for an invariable element is $H_{static}(i) = H_a(i)+H_d(i)+H_e(i)$, $H_a(i),H_d(i),H_e(i)$ respectively represent frequencies of occurrences of the obtained results after the *SHA1* transformation is performed on the identity ID information, the administrator number AN information and the administrator key AK information; and a frequency of occurrence of a distinct value for a variable element is $H_{dynamic}(i) = H_b(i)+H_c(i)$, $H_b(i),H_c(i)$ respectively represent frequencies of occurrences of the obtained results after the *SHA1* transformation is performed on password matrix *Matrix* information and initial authentication random number information.

7.  A terminal node according to claim 6, wherein, the frequency of occurrence $H_{static}(i)$ of a distinct value for an invariable element is stored in the first storage module (101) when a system is initialized, for being called later when the first variance value $\sigma^2$ and the first energy value $\mu_N$ are calculated.

8.  A platform, comprising a second information reception module, a second storage module, a second processing module and a second information transmission module, wherein,

the second information reception module (203) is configured to receive a first variance value $\sigma^2$ and a first energy value $\mu_N$ from each terminal node;

the second storage module (201) is configured to store authentication random number information $R_{T-1}$ of a T-1th authentication phase, identity ID information, administrator number AN information, administrator key AK information, password matrix identity information and password matrix *Matrix* information of each terminal node;

the second processing module (202) is configured to obtain matrix password value MX information of the platform according to the password matrix identity information stored by the platform itself and the password matrix *Matrix* information of the terminal node, and perform *SHA*1 transformation on the matrix password value MX information together with the identity ID information, the administrator number AN information, the administrator key AK information, and the random number information $R_T$ stored by the platform respectively, and combine the transformation results into a second global matrix $SHA_{matrix}$ and then calculate a second variance value $\sigma^2$ and a second energy value $\mu_N$ of the second global matrix $SHA_{matrix}$, and when the second variance value $\sigma^2$ and the second energy value $\mu_N$ match the received first variance value $\sigma^2$ and first energy value $\mu_N$, determine that a verification of the identity passes; and

the second information transmission module (204) is configured to broadcast random number information $R_T$ randomly generated in a $T^{th}$ authentication phase, password matrix identity information, $SHA1(R_{T-1} \parallel AN)$ information of the platform and displacement identity n to each terminal node;

wherein the second variance value $\sigma^2$ and the second energy value $\mu_N$ are obtained according to the following equations:

$$\sigma^2 = \sum_{i=0}^{L-1} (i - \mu)^2 H(i) \, ,$$

$$\mu_N = \sum_{i=0}^{L-1} H(i)^2 \, ,$$

wherein, a mean value $\mu = \sum_{i=0}^{L-1} iH(i)$, $H(i) = \dfrac{n_i}{N}$, $i = 0,1,...,L-1$ represents a frequency of occurrence of a distinct value, i represents a magnitude of the value, L represents a type of the value, $n_i$ represents a number of values with of a matrix a magnitude of i, and N represents a number of values of the matrix,

**characterized in that**,

the mean value $\mu$ is obtained according to the following equation:

$$\mu = \sum_{i=0}^{L-1} iH_{static}(i) + \sum_{i=0}^{L-1} iH_{dynamic}(i) \, ,$$

wherein, a frequency of occurrence of a distinct value for an invariable element is $H_{static}(i) = H_a(i)+H_d(i)+H_e(i)$, $H_a(i),H_d(i),H_e(i)$ respectively represent frequencies of occurrences of the obtained results after the $SHA1$ transformation is performed on the identity ID information, the administrator number AN information and the administrator key AK information; and a frequency of occurrence of a distinct value for a variable element is $H_{dynamic}(i) = H_b(i)+H_c(i)$, $H_b(i),H_c(i)$ respectively represent frequencies of occurrences of the obtained results after the $SHA1$ transformation is performed on password matrix $Matrix$ information and initial authentication random number information.

9. A platform according to claim 8, wherein, the frequency of occurrence $H_{static}(i)$ of a distinct value for an invariable element is stored in the second storage module (201) when a system is initialized, for being called later when the second variance value $\sigma^2$ and the second energy value $\mu_N$ are calculated.

**Patentansprüche**

1. Gegenseitiges Identitätsauthentifizierungsverfahren für ein drahtloses Sensornetzwerk, das die folgenden Schritte umfasst:

A. eine Plattform, die Zufallszahlinformationen $R_T$, die in einer $T^{ten}$ Authentifizierungsphase zufällig erzeugt wurden, Passwortmatrixidentitätsinformationen $SHA1(R_{T-1} \parallel AN)$-Informationen einer Plattform und einer Verschiebungsidentität n an einen Terminalknoten überträgt, wobei $SHA1(R_{T-1} \parallel AN) = SHA1(R_{T-1} \oplus (AN<<n))$; $R_{T-1}$ Authentifizierungszufallszahlinformationen einer T-1$^{ten}$ Authentifizierungsphase ist, die durch die Plattform gespeichert werden, und AN Administratornummerinformationen des Terminalknotens ist;

B. Berechnen des Terminalknotens von $SHA1(R_{T-1} \parallel AN)$-Informationen des Terminals gemäß den Authentifizierungszufallszahlinformationen $R_{T-1}$ der T-1$^{ten}$ Authentifizierungsphase und Administratornummerinformationen AN, die durch die Terminalknoten selbst gespeichert werden, wenn sich die $SHA1(R_{T-1} \parallel AN)$-Informationen des Terminals von $SHA1(R_{T-1} \parallel AN)$-Informationen der Plattform unterscheiden, Bestimmen, dass eine Identitätsüberprüfung fehlschlägt; anderweitig Erlangen von Matrixpasswortwert- MX -Informationen gemäß den Passwortmatrixidentitätsinformationen, die durch die Terminalknoten von der Plattform empfangen werden, und Passwortmatrix- $Matrix$ -Informationen, die in dem Terminalknoten vorgespeichert sind, und währenddessen, Aktualisieren der Zufallszahlinformationen $R_T$, die durch die Plattform an einen Speicherplatz des Terminalknotens gesendet werden;

C. Ausführen, durch den Terminalknoten, von *SHA*1-Transformation entsprechend an den erlangten Matrixpasswortwert- MX -Informationen und den Zufallszahlinformationen $R_T$ und vorgespeicherten Identitäts- ID -Informationen, Administratornummer- AN -Informationen und Administratorschlüssel- AK - Informationen und Kombinieren der Transformationsresultate in eine erste globale Matrix $SHA_{matrix}$ und dann Berechnen eines ersten Varianzwertes $\sigma^2$ und eines ersten Energiewertes $\mu_N$ der ersten globalen Matrix $SHA_{matrix}$ und Senden der ersten Varianz $\sigma^2$ und des ersten Energiewertes $\mu_N$ an die Plattform; und

D. Erlangen, durch die Plattform, von Matrixpasswortwert- MX - Informationen der Plattform gemäß den Passwortmatrixidentitätsinformationen, die durch die Plattform selbst gespeichert werden, und der Passwortmatrix- *Matrix* -Informationen des Terminalknotens und Ausführen von *SHA*1-Transformation entsprechend an den Matrixpasswortwert- MX -Informationen zusammen mit den Identitäts- ID -Informationen, den Administratornummer- AN -Informationen, den Administratorschlüssel- AK - Informationen und den Zufallszahlinformationen $R_T$, die durch die Plattform gespeichert werden, und Kombinieren der Transformationsresultate in eine zweite globale Matrix $SHA_{matrix}$ und dann Berechnen eines zweiten Varianzwertes $\sigma^2$ und eines zweiten Ener-giewertes $\mu_N$ der zweiten globalen Matrix $SHA_{matrix}$, und wenn der zweite Varianzwert $\sigma^2$ und der zweite En-ergiewert $\mu_N$ mit dem empfangenen ersten Varianzwert $\sigma^2$ und dem ersten Energiewert $\mu_N$ übereinstimmen, Bestimmen, dass die Identitätsüberprüfung besteht;

wobei in Schritt C und D der erste Varianzwert $\sigma^2$ und der zweite Varianzwert $\sigma^2$ gemäß den folgenden Glei-chungen erlangt werden:

$$\sigma^2 = \sum_{i=0}^{L-1}(i-\mu)^2 H(i),$$

in Schritt C und D der erste Energiewert $\mu_N$ und der zweite Energiewert $\mu_N$ gemäß den folgenden Gleichungen erlangt werden:

$$\mu_N = \sum_{i=0}^{L-1} H(i)^2,$$

wobei ein Durchschnittswert $\mu = \sum_{i=0}^{L-1} iH(i)$, $H(i) = \frac{n_i}{N}$, $i = 0,1,...,L$-1 eine Auftrittshäufigkeit eines unterschiedlichen Wertes darstellt, i eine Größenordnung des Wertes darstellt, L eine Art des Wertes darstellt, $n_i$ eine Anzahl an Werten einer Matrix mit einer Größenordnung von i darstellt und N eine Anzahl an Werten der Matrix darstellt;

**dadurch gekennzeichnet, dass**

der Durchschnittswert $\mu$ gemäß der folgenden Gleichung erlangt wird:

$$\mu = \sum_{i=0}^{L-1} iH_{static}(i) + \sum_{i=0}^{L-1} iH_{dynamic}(i),$$

wobei eine Auftrittshäufigkeit eines unterschiedlichen Wertes für ein unveränderliches Element $H_{static}(i) = H_a(i) + H_d(i) + H_e(i)$, $H_a(i)$, $H_d(i)$, $H_e(i)$ ist, das entsprechend Häufigkeiten des Auftretens der erlangten Resultate darstellt, nachdem die *SHA*1-Transformation an den Identitäts- ID -Informationen, den Administratornummer- AN -Informationen und den Administratorschlüssel- AK -Informationen ausgeführt wurde; und eine Auftrittshäufigkeit eines unterschiedlichen Wertes für ein variables Element $H_{dynamic}(i) = H_b(i) + H_c(i)$, $H_b(i)$, $H_c(i)$ ist, das entsprechend Häufigkeiten des Auftretens der erlangten Resultate darstellt, nachdem die *SHA*1-Transformation an den Passwortmatrix- *Matrix* -Informationen und den anfänglichen Authentifizierungszufallszahlinformationen ausgeführt wurde.

2. Verfahren nach Anspruch 1, ferner umfassend:

vor dem Ausführen aller Schritte nach Anspruch 1, Ausführen der folgenden Schritte:

Voreinstellen der Identitäts- ID -Informationen, Administratornummer- AN - Informationen, Administratorschlüssel- AK -Informationen, Passwortmatrix- *Matrix* - Informationen und anfänglichen Authentifizierungszufallszahlinformationen $R_0$ für den Terminalknoten und Speichern der Informationen; und

Erlangen, durch die Plattform, von Identitäts- ID -Informationen, Administratornummer- AN -Informationen, Administratorschlüssel- AK -Informationen, Passwortmatrix- *Matrix* -Informationen und anfänglichen Authentifizierungszufallszahlinformationen $R_0$ von jedem Terminalknoten und Speichern der erlangten Informationen.

**3.** Verfahren nach Anspruch 1, ferner umfassend:

Speichern der Auftrittshäufigkeit $H_{static}(i)$ eines unterschiedlichen Wertes für ein unveränderliches Element, wenn ein System initialisiert wird, um später aufgerufen zu werden, wenn der erste Varianzwert $\sigma^2$, der erste Energiewert $\mu_N$, der zweite Varianzwert $\sigma^2$ und der zweite Energiewert $\mu_N$ berechnet sind.

**4.** Gegenseitiges Identitätsüberprüfungssystem für ein drahtloses Sensornetzwerk, das einen Terminalknoten und eine Plattform umfasst, wobei,

die Terminalknoten ein erstes Informationsempfangsmodul (103), ein erstes Speichermodul (101), ein erstes Verarbeitungsmodul (102) und ein erstes Informationsübertragungsmodul (104) umfassen, wobei,

das erste Informationsempfangsmodul (103) konfiguriert ist, Zufallszahlinformationen $R_T$, die in einer T<sup>ten</sup> Authentifizierungsphase zufällig erzeugt wurden, Passwortmatrixidentitätsinformationen *SHA1($R_{T-1}$ ‖ AN)*-Informationen der Plattform und eine Verschiebungsidentität n von der Plattform zu erlangen;

das erste Speichermodul (101) konfiguriert ist, Authentifizierungszufallszahlinformationen $R_{T-1}$ einer T-1<sup>ten</sup> Authentifizierungsphase, Administratornummer- AN -Informationen, Passwortmatrix- *Matrix* -Informationen und Administratorschlüssel- AK -Informationen zu speichern;

das erste Verarbeitungsmodul (102) konfiguriert ist *SHA1($R_{T-1}$ ‖ AN)*-Informationen des Terminals gemäß Zufallszahlinformationen $R_{T-1}$ einer T-1<sup>ten</sup> Authentifizierungsphase und Administratornummer-Informationen AN, die durch die Terminalknoten selbst gespeichert werden, zu berechnen, und wenn die *SHA1($R_{T-1}$ ‖ AN)*-Informationen des Terminals sich von den *SHA1($R_{T-1}$ ‖ AN)*-Informationen der Plattform unterscheiden, zu bestimmen, dass eine Identitätsüberprüfung fehlschlägt; anderweitig Matrixpasswortwert- MX -Informationen gemäß den Passwortmatrixidentitätsinformationen, die durch die Terminalknoten von der Plattform empfangen werden, und Passwortmatrix- *Matrix* -Informationen, die in dem Terminalknoten vorgespeichert sind, zu erlangen und währenddessen, die Zufallszahlinformationen $R_T$, die durch die Plattform an einen Speicherplatz des Terminalknotens gesendet werden, zu aktualisieren; und *SHA*1-Transformation entsprechend an den erlangten Matrixpasswortwert- MX -Informationen und den Zufallszahlinformationen $R_T$ und vorgespeicherten Identitäts- ID -Informationen, Administratornummer- AN -Informationen und Administratorschlüssel- AK - Informationen auszuführen und die Transformationsresultate in eine erste globale Matrix SHA$_{matrix}$ zu kombinieren und dann einen ersten Varianzwert $\sigma^2$ und einen ersten Energiewert $\mu_N$ der ersten globalen Matrix SHA$_{matrix}$ zu berechnen und die erste Varianz $\sigma^2$ und den ersten Energiewert $\mu_N$ an die Plattform zu senden; und

das erste Informationsübertragungsmodul (104) konfiguriert ist, den ersten Varianzwert $\sigma^2$ und den ersten Energiewert $\mu_N$ an die Plattform zu senden;

die Plattform ein zweites Informationsempfangsmodul (203), ein zweites Speichermodul (201), ein zweites Verarbeitungsmodul (202) und ein zweites Informationsübertragungsmodul (204) umfasst, wobei,

das zweite Informationsempfangsmodul (203) konfiguriert ist, den ersten Varianzwert $\sigma^2$ und den ersten Energiewert $\mu_N$ von jedem Terminalknoten zu empfangen;

das zweite Speichermodul (201) konfiguriert ist, die Authentifizierungszufallszahlinformationen $R_{T-1}$ einer T-1<sup>ten</sup> Authentifizierungsphase, Identitäts- ID -Informationen, Administratornummer- AN -Informationen, Administratorschlüssel- AK -Informationen, Passwortmatrixidentitätsinformationen und Passwortmatrix- *Matrix* -Informationen von jedem Terminalknoten zu speichern;

das zweite Verarbeitungsmodul (202) konfiguriert ist, Matrixpasswortwert- MX - Informationen der Plattform gemäß den Passwortmatrixidentitätsinformationen, die durch die Plattform selbst gespeichert werden, und den Passwortmatrix- *Matrix* -Informationen der Terminalknoten zu erlangen und *SHA*1-Transformation entsprechend an den Matrixpasswortwert- MX -Informationen zusammen mit den Identitäts- ID -Informationen, Administratornummer- AN -Informationen, Administratorschlüssel- AK -Informationen und Zufallszahlinformationen $R_T$, die durch die Plattform gespeichert werden, auszuführen und die Transformationsresultate in eine zweite globale Matrix *SHA$_{matrix}$* zu kombinieren und dann einen zweiten Varianzwert $\sigma^2$ und einen zweiten Energiewert $\mu_N$ der zweiten globalen Matrix *SHA$_{matrix}$* zu berechnen, und wenn der zweite Varianzwert $\sigma^2$ und der zweite Energiewert $\mu_N$ mit dem empfangenen ersten Varianzwert $\sigma^2$ und dem ersten Energiewert $\mu_N$ übereinstimmen, zu bestimmen, dass die Identitätsüberprüfung besteht; und

das zweite Informationsübertragungsmodul (204) konfiguriert ist, Zufallszahlinformationen $R_T$, die in einer T<sup>ten</sup> Au-

thentifizierungsphase zufällig erzeugt werden, Passwortmatrixidentitätsinformationen, $SHA1(R_{T-1} \| AN)$-Informationen der Plattform und eine Verschiebungsidentität n an jeden Terminalknoten zu übertragen;

wobei der erste Varianzwert $\sigma^2$ und der zweite Varianzwert $\sigma^2$ gemäß den folgenden Gleichungen erlangt werden:

$$\sigma^2 = \sum_{i=0}^{L-1}(i-\mu)^2 H(i),$$

der erste Energiewert $\mu_N$ und der zweite Energiewert $\mu_N$ gemäß den folgenden Gleichungen erlangt werden:

$$\mu_N = \sum_{i=0}^{L-1} H(i)^2,$$

wobei ein Durchschnittswert $\mu = \sum_{i=0}^{L-1} iH(i)$, $H(i) = \frac{n_i}{N}$, $i = 0,1,...L-1$ eine Auftrittshäufigkeit eines unterschiedlichen Wertes darstellt, i eine Größenordnung des Wertes darstellt, L eine Art des Wertes darstellt, $n_i$ eine Anzahl an Werten einer Matrix mit einer Größenordnung von i darstellt und N eine Anzahl an Werten der Matrix darstellt; **dadurch gekennzeichnet, dass**

der Durchschnittswert $\mu$ gemäß der folgenden Gleichung erlangt wird:

$$\mu = \sum_{i=0}^{L-1} iH_{static}(i) + \sum_{i=0}^{L-1} iH_{dynamic}(i),$$

wobei eine Auftrittshäufigkeit eines unterschiedlichen Wertes für ein unveränderliches Element $H_{static}(i) = H_a(i) + H_d(i) + H_e(i)$, $H_a(i)$, $H_d(i)$, $H_e(i)$ ist, das entsprechend Häufigkeiten des Auftretens der erlangten Resultate darstellt, nachdem die SHA1-Transformation an den Identitäts- ID -Informationen, den Administratornummer-AN -Informationen und den Administratorschlüssel- AK -Informationen ausgeführt wurde; und eine Auftrittshäufigkeit eines unterschiedlichen Wertes für ein variables Element $H_{dynamic}(i) = H_b(i) + H_c(i)$, $H_b(i)$, $H_c(i)$ ist, das entsprechend Häufigkeiten des Auftretens der erlangten Resultate darstellt, nachdem die SHA1-Transformation an den Passwortmatrix- Matrix -Informationen und den anfänglichen Authentifizierungszufallszahlinformationen ausgeführt wurde.

5. System nach Anspruch 4, wobei die Auftrittshäufigkeit $H_{static}(i)$ eines unterschiedlichen Wertes für ein unveränderliches Element in dem ersten Speichermodul (101) und dem zweiten Speichermodul (201) gespeichert wird, wenn das System dafür initialisiert wird, später aufgerufen zu werden, wenn der erste Varianzwert $\sigma^2$, der erste Energiewert $\mu_N$, der zweite Varianzwert $\sigma^2$ und der zweite Energiewert $\mu_N$ berechnet wird.

6. Terminalknoten, umfassend ein erstes Informationsempfangsmodul, ein erstes Speichermodul, ein erstes Verarbeitungsmodul und ein erstes Informationsübertragungsmodul, wobei,

das erste Informationsempfangsmodul (103) konfiguriert ist, Zufallszahlinformationen $R_T$, die in einer T-ten Authentifizierungsphase zufällig erzeugt wurden, Passwortmatrixidentitätsinformationen $SHA1(R_{T-1} \| AN)$-Informationen einer Plattform und eine Verschiebungsidentität n von der Plattform zu erlangen;

das erste Speichermodul (101) konfiguriert ist, Authentifizierungszufallszahlinformationen $R_{T-1}$ einer T-1-ten Authentifizierungsphase, Administratornummer- AN -Informationen, Passwortmatrix- Matrix -Informationen und Administratorschlüssel- AK -Informationen zu speichern;

das erste Verarbeitungsmodul (102) konfiguriert ist $SHA1(R_{T-1} \| AN)$-Informationen des Terminals gemäß den Zufallszahlinformationen $R_{T-1}$ einer T-1-ten Authentifizierungsphase und den Administratornummer-Informationen AN, die durch die Terminalknoten selbst gespeichert werden, zu berechnen, und wenn die $SHA1(R_{T-1} \| AN)$-Informationen des Terminals sich von den $SHA1(R_{T-1} \| AN)$-Informationen der Plattform unterscheiden, zu bestimmen, dass eine Identitätsüberprüfung fehlschlägt; anderweitig Matrixpasswortwert- MX -Informationen gemäß den Passwortmatrixidentitätsinformationen, die durch die Terminalknoten von der Plattform empfangen werden, und Passwortmatrix- Matrix -Informationen, die in dem Terminalknoten vorgespeichert sind, zu erlangen und währenddessen, die Zufallszahlinformationen $R_T$, die durch die Plattform an einen Speicherplatz des Terminalknotens gesendet werden, zu aktualisieren; und *SHA*1-Transformation entsprechend an den erlangten Matrixpasswortwert-MX -Informationen und den Zufallszahlinformationen $R_T$ und vorgespeicherten Identitäts- ID -Informationen, Administratornummer- AN -Informationen und Administratorschlüssel- AK - Informationen auszuführen und die Transformationsresultate in eine erste globale Matrix $SHA_{matrix}$ zu kombinieren und dann einen ersten Varianzwert $\sigma^2$ und einen ersten Energiewert $\mu_N$ der ersten globalen Matrix $SHA_{matrix}$ zu berechnen und die erste Varianz $\sigma^2$ und den ersten Energiewert $\mu_N$ an die Plattform zu senden; und

das erste Informationsübertragungsmodul (104) konfiguriert ist, den ersten Varianzwert $\sigma^2$ und den ersten Energiewert $\mu_N$ an die Plattform zu senden;

wobei, der erste Varianzwert $\sigma^2$ und der erste Energiewert $\mu_N$ gemäß den folgenden Gleichungen erlangt werden:

$$\sigma^2 = \sum_{i=0}^{L-1} (i-\mu)^2 H($$

wobei ein Durchschnittswert $\mu = \sum_{i=0}^{L-1} iH(i)$, $H(i) = \frac{n_i}{N}$, $i = 0,1,...L-1$ eine Auftrittshäufigkeit eines unterschiedlichen Wertes darstellt, i eine Größenordnung des Wertes darstellt, L eine Art des Wertes darstellt, $n_i$ eine Anzahl an Werten einer Matrix mit einer Größenordnung von i darstellt und N eine Anzahl an Werten der Matrix darstellt, **dadurch gekennzeichnet, dass** der Durchschnittswert $\mu$ gemäß der folgenden Gleichung erlangt wird:

$$\mu = \sum_{i=0}^{L-1} iH_{static}(i) + \sum_{i=0}^{L-1} iH_{dynamic}(i) \,,$$

wobei eine Auftrittshäufigkeit eines unterschiedlichen Wertes für ein unveränderliches Element $H_{static}(i) = H_a(i) + H_d(i) + H_e(i)$, $H_a(i)$, $H_d(i)$, $H_e(i)$ ist, das entsprechend Häufigkeiten des Auftretens der erlangten Resultate darstellt, nachdem die *SHA*1-Transformation an den Identitäts- ID -Informationen, den Administratornummer-AN -Informationen und den Administratorschlüssel- AK -Informationen ausgeführt wurde; und eine Auftrittshäufigkeit eines unterschiedlichen Wertes für ein variables Element $H_{dynamic}(i) = H_b(i) + H_c(i)$, $H_b(i)$, $H_c(i)$ ist, das entsprechend Häufigkeiten des Auftretens der erlangten Resultate darstellt, nachdem die *SHA*1-Transformation an Passwortmatrix-*Matrix* -Informationen und anfänglichen Authentifizierungszufallszahlinformationen ausgeführt wurde.

7. Terminalknoten nach Anspruch 6, wobei die Auftrittshäufigkeit $H_{static}(i)$ eines unterschiedlichen Wertes für ein unveränderliches Element in dem ersten Speichermodul (101) gespeichert wird, wenn ein System initialisiert wird, um später aufgerufen zu werden, wenn der erste Varianzwert $\sigma^2$ und der erste Energiewert $\mu_N$ berechnet wird.

8. Plattform, die ein zweites Informationsempfangsmodul, ein zweites Speichermodul, ein zweites Verarbeitungsmodul und ein zweites Informationsübertragungsmodul umfasst, wobei,
das zweite Informationsempfangsmodul (203) konfiguriert ist, einen ersten Varianzwert $\sigma^2$ und einen ersten Energiewert $\mu_N$ von jedem Terminalknoten zu empfangen;
das zweite Speichermodul (201) konfiguriert ist, Authentifizierungszufallszahlinformationen $R_{T-1}$ einer T-1$^{ten}$ Authentifizierungsphase, Identitäts- ID -Informationen, Administratornummer- AN -Informationen, Administratorschlüssel- AK -Informationen, Passwortmatrixidentitätsinformationen und Passwortmatrix- *Matrix* -Informationen von jedem Terminalknoten zu speichern;
das zweite Verarbeitungsmodul (202) konfiguriert ist, Matrixpasswortwert- MX - Informationen der Plattform gemäß den Passwortmatrixidentitätsinformationen, die durch die Plattform selbst gespeichert werden, und den Passwortmatrix- *Matrix* -Informationen der Terminalknoten zu erlangen und *SHA1*-Transformation entsprechend an den Matrixpasswortwert- MX -Informationen zusammen mit den Identitäts- ID -Informationen, Administratornummer- AN -Informationen, Administratorschlüssel- AK -Informationen und Zufallszahlinformationen $R_T$, die durch die Plattform gespeichert werden, auszuführen und die Transformationsresultate in eine zweite globale Matrix $SHA_{matrix}$ zu kombinieren und dann einen zweiten Varianzwert $\sigma^2$ und einen zweiten Energiewert $\mu_N$ der zweiten globalen Matrix

$SHA_{matrix}$ zu berechnen, und wenn der zweite Varianzwert $\sigma^2$ und der zweite Energiewert $\mu_N$ mit dem empfangenen ersten Varianzwert $\sigma^2$ und dem ersten Energiewert $\mu_N$ übereinstimmen, zu bestimmen, dass eine Identitätsüberprüfung besteht; und

das zweite Informationsübertragungsmodul (204) konfiguriert ist, Zufallszahlinformationen $R_T$, die in einer $T^{ten}$ Authentifizierungsphase zufällig erzeugt werden, Passwortmatrixidentitätsinformationen, $SHA1(R_{T-1} \parallel AN)$-Informationen der Plattform und eine Verschiebungsidentität n an jeden Terminalknoten zu übertragen;

wobei der zweite Varianzwert $\sigma^2$ und der zweite Energiewert $\mu_N$ gemäß den folgenden Gleichungen erlangt werden:

$$\sigma^2 = \sum_{i=0}^{L-1} (i-\mu)^2 H(i) \, ,$$

$$\mu_N = \sum_{i=0}^{L-1} H(i)^2 \, ,$$

wobei ein Durchschnittswert $\mu = \sum_{i=0}^{L-1} iH(i)$, $H(i) = \frac{n_i}{N}$, $i = 0,1,..L-1$ eine Auftrittshäufigkeit eines unterschiedlichen Wertes darstellt, i eine Größenordnung des Wertes darstellt, L eine Art des Wertes darstellt, $n_i$ eine Anzahl an Werten einer Matrix mit einer Größenordnung von i darstellt und N eine Anzahl an Werten der Matrix darstellt, **dadurch gekennzeichnet, dass**

der Durchschnittswert $\mu$ gemäß der folgenden Gleichung erlangt wird:

$$\mu = \sum_{i=0}^{L-1} iH_{static}(i) + \sum_{i=0}^{L-1} iH_{dynamic}(i) \, ,$$

wobei eine Auftrittshäufigkeit eines unterschiedlichen Wertes für ein unveränderliches Element $H_{static}(i) = H_a(i) + H_d(i) + H_e(i)$, $H_a(i)$, $H_d(i)$, $H_e(i)$ ist, das entsprechend Häufigkeiten des Auftretens der erlangten Resultate darstellt, nachdem die $SHA1$-Transformation an den Identitäts- ID -Informationen, den Administratornummer-AN -Informationen und den Administratorschlüssel- AK -Informationen ausgeführt wurde; und eine Auftrittshäufigkeit eines unterschiedlichen Wertes für ein variables Element $H_{dynamic}(i) = H_b(i) + H_c(i)$, $H_b(i)$, $H_c(i)$ ist, das entsprechend Häufigkeiten des Auftretens der erlangten Resultate darstellt, nachdem die $SHA1$-Transformation an Passwortmatrix-*Matrix* -Informationen und anfänglichen Authentifizierungszufallszahlinformationen ausgeführt wurde.

9. Plattform nach Anspruch 8, wobei die Auftrittshäufigkeit $H_{static}(i)$ eines unterschiedlichen Wertes für ein unveränderliches Element in dem zweiten Speichermodul (201) gespeichert wird, wenn ein System initialisiert wird, um später aufgerufen zu werden, wenn der zweite Varianzwert $\sigma^2$ und der zweite Energiewert $\mu_N$ berechnet wird.

## Revendications

1. Procédé d'authentification d'identité mutuelle d'un réseau de capteurs sans fil, comprenant les étapes suivantes :

A. une plateforme diffusant des informations de numéro aléatoire $R_T$ générées de manière aléatoire dans une $T^{ème}$ phase d'authentification, des informations d'identité de matrice de mot de passe, des informations $SHA1(R_{T-1} \parallel AN)$ d'une plateforme et d'une identité de déplacement n à un noeud terminal, dans lesquelles $SHA1(R_{T-1} \parallel AN) = SHA1(R_{T-1} \oplus (AN << n))$ ; $R_{T-1}$ représente des informations de numéro aléatoire d'authentification d'une T-1$^{ème}$ phase d'authentification enregistrées par la plateforme, et AN représente des informations de numéro d'administrateur du noeud terminal ;

B. le noeud terminal calculant les informations $SHA1(R_{T-1} \parallel AN)$ du terminal d'après les informations de numéro aléatoire d'authentification $R_{T-1}$ de la T-1$^{eme}$ phase d'authentification et les informations de numéro d'administrateur AN enregistrées par le noeud terminal lui-même, si les informations $SHA1(R_{T-1} \parallel AN)$ du terminal sont différentes des informations $SHA1(R_{T-1} \parallel AN)$ de la plateforme, déterminant qu'une vérification d'identité a échoué ; dans le cas contraire, l'obtention des informations MX de valeur de mot de passe de matrice d'après les informations d'identité de matrice de mot de passe reçues par le noeud terminal à partir de la plateforme et des informations *Matrice* de matrice de mot de passe préenregistrées dans le noeud terminal, et dans un même temps, la mise à jour des informations de numéro aléatoire Retransmises par la plateforme à un espace de stockage du noeud terminal ;

C. le noeud terminal effectuant la transformation *SHA*1 des informations MX de valeur de mot de passe de matrice et des informations de numéro aléatoire $R_T$ obtenues, mais aussi des informations ID d'identité, des informations AN de numéro d'administrateur et des informations AK de clé d'administrateur préenregistrées respectivement, et la combinaison des résultats de transformation pour former une première matrice globale $SHA_{matrice}$, puis le calcul d'une première valeur de variance $\sigma^2$ et une première valeur d'énergie $\mu_N$ de la première matrice globale $SHA_{matrice}$, et la transmission de la première valeur de variance $\sigma^2$ et d'énergie $\mu_N$ à la plateforme ; et

D. la plateforme obtenant les informations MX de valeur de mot de passe de matrice de la plateforme d'après les informations d'identité de matrice de mot de passe enregistrées par la plateforme elle-même et les informations *Matrice* de matrice de mot de passe du noeud terminal, et exécutant la transformation *SHA*1 des informations MX de valeur de mot de passe de matrice avec les informations ID d'identité, les informations AN de numéro d'administrateur, les informations AK de clé d'administrateur, et les informations de numéro aléatoire $R_T$ enregistrées par la plateforme respectivement, et la combinaison des résultats de la transformation pour former une deuxième matrice globale $SHA_{matrice}$, puis le calcul d'une deuxième valeur de variance $\sigma^2$ et une deuxième valeur d'énergie $\mu_N$ de la deuxième matrice globale $SHA_{matrice}$, et lorsque la deuxième valeur de variance $\sigma^2$ et la deuxième valeur d'énergie $\mu_N$ correspondent à la première valeur de variance $\sigma^2$ et à la première valeur d'énergie $\mu_N$, déterminant que la vérification de l'identité est valide ;

dans lequel, à l'étape C et D, la première valeur de variance $\sigma^2$ et la deuxième valeur de variance $\sigma^2$ sont obtenues conformément aux équations suivantes :

$$\sigma^2 = \sum_{i=0}^{L-1} (i-\mu)^2 H(i) \,,$$

à l'étape C et D, la première valeur d'énergie $\mu_N$ et la deuxième valeur d'énergie $\mu_N$ sont obtenues conformément aux équations suivantes :

$$\mu_N = \sum_{i=0}^{L-1} H(i)^2 \,,$$

dans lequel, une valeur moyenne $\mu = \sum_{i=0}^{L-1} iH(i)$, $H(i) = \frac{n_i}{N}, i = 0,1,...,L-1$ représente la fréquence d'occurrence d'une valeur distincte, i représente l'amplitude de la valeur, L représente le type de la valeur, $n_i$ représente le nombre de valeurs d'une matrice ayant une amplitude de i, et N représente le nombre de valeurs de la matrice ;

**caractérisé en ce que**,

la valeur moyenne $\mu$ est obtenue conformément à l'équation suivante :

$$\mu = \sum_{i=0}^{L-1} iH_{static}(i) + \sum_{i=0}^{L-1} iH_{dynamic}(i) \,,$$

dans lequel, la fréquence d'occurrence d'une valeur distincte d'un élément invariable est $H_{static}(i) = H_a(i) + H_d(i) + H_e(i)$, $H_a(i)$, $H_d(i)$, $H_e(i)$ représentant respectivement les fréquences d'occurrence des résultats obtenus après la transformation *SHA1* effectuée sur les informations ID d'identité, les informations AN de numéro d'administrateur et les informations AK de clé d'administrateur ; et la fréquence d'occurrence d'une valeur distincte d'un élément variable est $H_{dynamic}(i) = H_b(i) + H_c(i)$, $H_b(i)$, $H_c(i)$ représentant respectivement les fréquences d'occurrence des résultats obtenus après la transformation *SHA*1 effectuée sur les informations *Matrice* de matrice de mot de passe et les informations de numéro aléatoire d'authentification initiale.

**2.** Procédé selon la revendication 1, comprenant en outre :
avant l'exécution de l'ensemble des étapes selon la revendication 1, l'exécution des étapes suivantes :

le préréglage des informations ID, des informations AN de numéro d'administrateur, des informations AK de clé d'administrateur, des informations *Matrice* de matrice de mot de passe et des informations de numéro aléatoire d'authentification initiale $R_0$ du noeud terminal, et l'enregistrement des informations ; et
la plateforme obtenant les informations ID, les informations AN de numéro d'administrateur, les informations AK de clé d'administrateur, les informations *Matrice* de matrice de mot de passe et les informations de numéro aléatoire d'authentification initiale $R_0$ de chaque noeud terminal, et l'enregistrement des informations obtenues.

**3.** Procédé selon la revendication 1, comprenant en outre :
l'enregistrement de la fréquence d'occurrence $H_{static}(i)$ d'une valeur distincte d'un élément invariable lorsqu'un système est initialisé, devant être appelé plus tard lorsque la première valeur de variance $\sigma^2$, la première valeur d'énergie $\mu_N$, la deuxième valeur de variance $\sigma^2$ et la deuxième valeur d'énergie $\mu_N$ sont calculées.

**4.** Système d'authentification d'identité mutuelle d'un réseau de capteurs sans fil, comprenant un noeud terminal et une plateforme, dans lequel
le noeud terminal comprend un premier module de réception d'informations (103), un premier module de mémoire (101), un premier module de traitement (102) et un premier module de transmission d'informations (104), dans lequel,
le premier module de réception d'informations (103) est configuré pour obtenir des informations de numéro aléatoire $R_T$ générées de manière aléatoire dans une $T^{ème}$ phase d'authentification, des informations d'identité de matrice de mot de passe, des informations *SHA*1 $(R_{T-1} \| AN)$ de la plateforme et l'identité de déplacement n provenant de la plateforme ;
le premier module de mémoire (101) est configuré pour enregistrer des informations de numéro aléatoire d'authentification $R_{T-1}$ d'une T-1$^{ème}$ phase d'authentification, des informations AN de numéro d'administrateur, des informations *Matrice* de matrice de mot de passe et des informations AK de clé d'administrateur ;
le premier module de traitement (102) est configuré pour calculer les informations *SHA*1 $(R_{T-1} \| AN)$ du terminal d'après les informations de numéro aléatoire $R_{T-1}$ d'une T-1$^{ème}$ phase d'authentification et les informations AN de numéro d'administrateur enregistrées par le noeud terminal lui-même, et si les informations *SHA*1 $(R_{T-1} \| AN)$ du terminal sont différentes des informations *SHA*1 $(R_{T-1} \| AN)$ de la plateforme, pour déterminer qu'une vérification d'identité a échoué ; dans le cas contraire, obtenir des informations MX de valeur de mot de passe de matrice d'après les informations d'identité de matrice de mot de passe reçues par le noeud terminal à partir de la plateforme et des informations *Matrice* de matrice de mot de passe préenregistrées dans le noeud terminal, et dans un même temps, mettre à jour les informations de numéro aléatoire $R_T$ transmises par la plateforme à un espace de stockage du noeud terminal ; et effectuer la transformation *SHA*1 des informations MX de valeur de mot de passe de matrice et des informations de numéro aléatoire $R_T$ obtenues, mais aussi des informations ID d'identité, des informations AN de numéro d'administrateur et des informations AK de clé d'administrateur préenregistrées respectivement, combiner les résultats de transformation pour former une première matrice globale $SHA_{matrice}$, puis calculer une première valeur de variance $\sigma^2$ et une première valeur d'énergie $\mu_N$ de la première matrice globale $SHA_{matrice}$, et transmettre la première valeur de variance $\sigma^2$ et d'énergie $\mu_N$ au premier module de transmission d'informations ; et
le premier module de transmission d'informations (104) est configuré pour transmettre la première valeur de variance $\sigma^2$ et la première valeur d'énergie $\mu_N$ à la plateforme ;
la plateforme comprend un deuxième module de réception d'informations (203), un deuxième module de mémoire (201), un deuxième module de traitement (202) et un deuxième module de transmission d'informations (204), dans lequel,
le deuxième module de réception d'informations (203) est configuré pour recevoir la première valeur de variance $\sigma^2$ et la première valeur d'énergie $\mu_N$ provenant de chaque noeud terminal ;
le deuxième module de mémoire (201) est configuré pour enregistrer les informations de numéro aléatoire d'authentification $R_{T-1}$ d'une T-1$^{ème}$ phase d'authentification, les informations ID d'identité, les informations AN de numéro d'administrateur, les informations AK de clé d'administrateur, les informations d'identité de matrice de mot de passe et les informations *Matrice* de matrice de mot de passe de chaque noeud terminal ;
le deuxième module de traitement (202) est configuré pour obtenir des informations MX de valeur de mot de passe de matrice de la plateforme d'après les informations d'identité de matrice de mot de passe enregistrées par la plateforme elle-même et les informations *Matrice* de matrice de mot de passe du noeud terminal, et exécuter la transformation *SHA*1 des informations MX de valeur de mot de passe de matrice avec les informations ID d'identité, les informations AN de numéro d'administrateur, les informations AK de clé d'administrateur, et les informations de numéro aléatoire $R_T$ enregistrées par la plateforme respectivement, combiner les résultats de la transformation pour former une deuxième matrice globale $SHA_{matrice}$, puis calculer une deuxième valeur de variance $\sigma^2$ et une deuxième

valeur d'énergie $\mu_N$ de la deuxième matrice globale *SHA*$_{matrice}$, et lorsque la deuxième valeur de variance $\sigma^2$ et la deuxième valeur d'énergie $\mu_N$ correspondent à la première valeur de variance $\sigma^2$ et à la première valeur d'énergie $\mu_N$, pour déterminer que la vérification de l'identité est valide ; et

le deuxième module de transmission d'informations (204) est configuré pour diffuser des informations de numéro aléatoire $R_T$ générées de manière aléatoire dans une T$^{ème}$ phase d'authentification, des informations d'identité de matrice de mot de passe, des informations *SHA*1 *(R$_{T-1}$ || AN)* de la plateforme et l'identité de déplacement n provenant de chaque nœud terminal ;

dans lequel la première valeur de variance $\sigma^2$ et la deuxième valeur de variance $\sigma^2$ sont obtenues conformément aux équations suivantes :

$$\sigma^2 = \sum_{i=0}^{L-1}(i-\mu)^2 H(i) \,,$$

la première valeur d'énergie $\mu_N$ et la deuxième valeur d'énergie $\mu_N$ sont obtenues conformément aux équations suivantes :

$$\mu_N = \sum_{i=0}^{L-1} H(i)^2 \,,$$

dans lequel, une valeur moyenne $\mu = \sum_{i=0}^{L-1} iH(i)$, $H(i) = \dfrac{n_i}{N}, i = 0,1,...,L-1$ représente la fréquence d'occurrence d'une valeur distincte, i représente l'amplitude de la valeur, L représente le type de la valeur, $n_i$ représente le nombre de valeurs d'une matrice ayant une amplitude de i, et N représente le nombre de valeurs de la matrice ;

**caractérisé en ce que**,

la valeur moyenne $\mu$ est obtenue conformément à l'équation suivante :

$$\mu = \sum_{i=0}^{L-1} iH_{static}(i) + \sum_{i=0}^{L-1} iH_{dynamic}(i) \,,$$

dans lequel, la fréquence d'occurrence d'une valeur distincte d'un élément invariable est $H_{static}(i) = H_a(i) + H_d(i) + H_e(i)$, $H_a(i)$, $H_d(i)$, $H_e(i)$ représentant respectivement les fréquences d'occurrence des résultats obtenus après la transformation *SHA1* effectuée sur les informations ID d'identité, les informations AN de numéro d'administrateur et les informations AK de clé d'administrateur ; et la fréquence d'occurrence d'une valeur distincte d'un élément variable est $H_{dynamic}(i) = H_b(i) + H_c(i)$, $H_b(i)$, $H_c(i)$ représentant respectivement les fréquences d'occurrence des résultats obtenus après la transformation *SHA*1 effectuée sur les informations *Matrice* de matrice de mot de passe et les informations de numéro aléatoire d'authentification initiale.

5. Système selon la revendication 4, dans lequel la fréquence d'occurrence $H_{static}(i)$ d'une valeur distincte d'un élément invariable est enregistrée dans le premier module de mémoire (101) et le deuxième module de mémoire (201) lorsque le système est initialisé, devant être appelé plus tard lorsque la première valeur de variance $\sigma^2$, la première valeur d'énergie $\mu_N$, la deuxième valeur de variance $\sigma^2$ et la deuxième valeur d'énergie $\mu_N$ sont calculées.

6. Nœud terminal, comprenant un premier module de réception d'informations, un premier module de mémoire, un premier module de traitement et un premier module de transmission d'informations, dans lequel,

le premier module de réception d'informations (103) est configuré pour obtenir des informations de numéro aléatoire $R_T$ générées de manière aléatoire dans une T$^{ème}$ phase d'authentification, des informations d'identité de matrice de mot de passe, des informations *SHA*1 *(R$_{T-1}$ || AN)* d'une plateforme et une identité de déplacement n provenant de la plateforme ;

le premier module de mémoire (101) est configuré pour enregistrer des informations de numéro aléatoire d'authentification $R_{T-1}$ d'une T-1$^{ème}$ phase d'authentification, des informations AN de numéro d'administrateur, des informations *Matrice* de matrice de mot de passe et des informations AK de clé d'administrateur ;

le premier module de traitement (102) est configuré pour calculer les informations *SHA*1 *(R$_{T-1}$ || AN)* du terminal d'après les informations de numéro aléatoire R$_{T-1}$ d'une T-1$^{ème}$ phase d'authentification et les informations AN de numéro d'administrateur enregistrées par le noeud terminal lui-même, et si les informations *SHA*1 *(R$_{T-1}$ || AN)* du terminal sont différentes des informations *SHA*1 *(R$_{T-1}$ || AN)* de la plateforme, pour déterminer qu'une vérification d'identité a échoué ; dans le cas contraire, obtenir des informations MX de valeur de mot de passe de matrice d'après les informations d'identité de matrice de mot de passe reçues par le noeud terminal à partir des informations *Matrice* de matrice de mot de passe et de la plateforme préenregistrées dans le noeud terminal, et dans un même temps, mettre à jour des informations de numéro aléatoire R$_T$ transmises par la plateforme à un espace de stockage du noeud terminal ; et effectuer la transformation *SHA*1 des informations MX de valeur de mot de passe de matrice et des informations de numéro aléatoire R$_T$ obtenues, mais aussi les informations ID d'identité, les informations AN de numéro d'administrateur et des informations AK de clé d'administrateur préenregistrées respectivement, combiner les résultats de transformation pour former une première matrice globale *SHA$_{matrice}$* et calculer une première valeur de variance σ$^2$ et une première valeur d'énergie $\mu_N$ de la première matrice globale *SHA$_{matrice}$*, et transmettre la première valeur de variance σ$^2$ et d'énergie $\mu_N$ au premier module de transmission d'informations ; et

le premier module de transmission d'informations (104) est configuré pour transmettre la première valeur de variance σ$^2$ et la première valeur d'énergie $\mu_N$ à la plateforme ;

dans lequel la première valeur de variance σ$^2$ et la première valeur d'énergie $\mu_N$ sont obtenues conformément aux équations suivantes :

$$\sigma^2 = \sum_{i=0}^{L-1} (i-\mu)^2 H(i) ,$$

$$\mu_N = \sum^{L-1} F$$

dans lequel, une valeur moyenne ___ représente la fréquence d'occurrence d'une valeur distincte, i représente l'amplitude de la valeur, L représente le type de la valeur, $n_i$ représente le nombre de valeurs d'une matrice ayant une amplitude de i, et N représente le nombre de valeurs de la matrice,

**caractérisé en ce que** la valeur moyenne $\mu$ est obtenue conformément à l'équation suivante :

$$\mu = \sum_{i=0}^{L-1} iH_{static}(i) + \sum_{i=0}^{L-1} iH_{dynamic}(i) ,$$

dans lequel, la fréquence d'occurrence d'une valeur distincte d'un élément invariable est H$_{static}$(i) = H$_a$(i) + H$_d$(i) + H$_e$(i), H$_a$(i), H$_d$(i), H$_e$(i) représentant respectivement les fréquences d'occurrence des résultats obtenus après la transformation *SHA1* effectuée sur les informations ID d'identité, les informations AN de numéro d'administrateur et les informations AK de clé d'administrateur ; et la fréquence d'occurrence d'une valeur distincte d'un élément variable est H$_{dynamic}$(i) = H$_b$(i) + H$_c$(i), H$_b$(i), H$_c$(i) représentant respectivement les fréquences d'occurrence des résultats obtenus après la transformation *SHA*1 effectuée sur les informations *Matrice* de matrice de mot de passe et les informations de numéro aléatoire d'authentification initiale.

7. Noeud terminal selon la revendication 6, dans lequel la fréquence d'occurrence H$_{static}$(i) d'une valeur distincte d'un élément invariable est enregistrée dans le premier module de mémoire (101) lorsqu'un système est initialisé, devant être appelé plus tard lorsque la première valeur de variance σ$^2$ et la première valeur d'énergie $\mu_N$ sont calculées.

8. Plateforme comprenant un deuxième module de réception d'informations, un deuxième module de mémoire, un deuxième module de traitement et un deuxième module de transmission d'informations, dans laquelle,

le deuxième module de réception d'informations (203) est configuré pour recevoir une première valeur de variance σ$^2$ et une première valeur d'énergie $\mu_N$ provenant de chaque noeud terminal ;

le deuxième module de mémoire (201) est configuré pour enregistrer des informations de numéro aléatoire d'authentification $R_{T-1}$ d'une T-1$^{ème}$ phase d'authentification, des informations ID d'identité, des informations AN de numéro d'administrateur, des informations AK de clé d'administrateur, des informations d'identité de matrice de mot de passe et des informations *Matrice* de matrice de mot de passe de chaque noeud terminal ;

le deuxième module de traitement (202) est configuré pour obtenir des informations MX de valeur de mot de passe de matrice de la plateforme d'après les informations d'identité de matrice de mot de passe enregistrées par la plateforme elle-même et les informations *Matrice* de matrice de mot de passe du noeud terminal, et exécuter la transformation *SHA*1 des informations MX de valeur de mot de passe de matrice avec les informations ID d'identité, les informations AN de numéro d'administrateur, les informations AK de clé d'administrateur, et les informations de numéro aléatoire $R_T$ enregistrées par la plateforme respectivement, combiner les résultats de la transformation pour former une deuxième matrice globale $SHA_{matrice}$, puis calculer une deuxième valeur de variance $\sigma^2$ et une deuxième valeur d'énergie $\mu_N$ de la deuxième matrice globale $SHA_{matrice}$, et lorsque la deuxième valeur de variance $\sigma^2$ et la deuxième valeur d'énergie $\mu_N$ correspondent à la première valeur de variance $\sigma^2$ et à la première valeur d'énergie $\mu_N$, pour déterminer que la vérification de l'identité est valide ;

le deuxième module de transmission d'informations (204) est configuré pour diffuser des informations de numéro aléatoire $R_T$ générées de manière aléatoire dans une T$^{ème}$ phase d'authentification, des informations d'identité de matrice de mot de passe, des informations *SHA*1 $(R_{T-1} \| AN)$ de la plateforme et l'identité de déplacement n provenant de chaque noeud terminal ;

dans laquelle la deuxième valeur de variance $\sigma^2$ et la deuxième valeur d'énergie $\mu_N$ sont obtenues conformément aux équations suivantes :

$$\sigma^2 = \sum_{i=0}^{L-1} (i - \mu)^2 H(i) \,,$$

$$\mu_N = \sum_{i=0}^{L-1} H(i$$

dans laquelle, une valeur moyenne $\mu = \sum_{i=0}^{L-1} iH(i), \ H(i) = \frac{n_i}{N}, i = 0,1,...,L-1$ représente la fréquence d'occurrence d'une valeur distincte, i représente l'amplitude de la valeur, L représente le type de la valeur, $n_i$ représente le nombre de valeurs d'une matrice ayant une amplitude de i, et N représente le nombre de valeurs de la matrice,

**caractérisée en ce que**,

la valeur moyenne $\mu$ est obtenue conformément à l'équation suivante :

$$\mu = \sum_{i=0}^{L-1} iH_{static}(i) + \sum_{i=0}^{L-1} iH_{dynamic}(i) \,,$$

dans laquelle, la fréquence d'occurrence d'une valeur distincte d'un élément invariable est $H_{static}(i) = H_a(i) + H_d(i) + H_e(i)$, $H_a(i)$, $H_d(i)$, $H_e(i)$ représentant respectivement les fréquences d'occurrence des résultats obtenus après la transformation *SHA1* effectuée sur les informations ID d'identité, les informations AN de numéro d'administrateur et les informations AK de clé d'administrateur ; et la fréquence d'occurrence d'une valeur distincte d'un élément variable est $H_{dynamic}(i) = H_b(i) + H_c(i)$, $H_b(i)$, $H_c(i)$ représentant respectivement les fréquences d'occurrence des résultats obtenus après la transformation *SHA*1 effectuée sur les informations *Matrice* de matrice de mot de passe et les informations de numéro aléatoire d'authentification initiale.

**9.** Plateforme selon la revendication 8, dans laquelle la fréquence d'occurrence $H_{static}(i)$ d'une valeur distincte d'un élément invariable est enregistrée dans le deuxième module de mémoire (201) lorsqu'un système est initialisé, devant être appelé plus tard lorsque la deuxième valeur de variance $\sigma^2$ et la deuxième valeur d'énergie $\mu_N$ sont calculées.

FIG. 1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A novel mutual authentication scheme for Internet of Things. **GUANGLEI ZHAO et al.** MODELLING, IDENTIFICATION AND CONTROL (ICMIC), PROCEEDINGS OF 2011 INTERNATIONAL CONFERENCE. IEEE, 26 June 2011